# EUROPÄISCHE PATENTSCHRIFT

(11) **EP 1 699 593 B1**
(45) Veröffentlichungstag und Bekanntmachung des Hinweises auf die Patenterteilung: **15.10.2008**
(21) Anmeldenummer: 04819671.1
(22) Anmeldetag: 08.11.2004
(51) Int. Cl.: B24B 23/00, B24D 5/16, F16F 15/36, B25F 5/00, B23Q 11/00

(54) **HANDSCHLEIFMASCHINE UND AUSWUCHTEINHEIT**
HAND GRINDER AND BALANCING UNIT
MEULEUSE A MAIN ET UNITE D'EQUILIBRAGE

(30) Priorität: 06.12.2003 DE 10357145
(43) Veröffentlichungstag der Anmeldung: 13.09.2006
(73) Patentinhaber: ROBERT BOSCH GMBH, 70442 Stuttgart (DE)
(72) Erfinder: LAMPRECHT, Justus, 72144 Dusslingen (DE)
(86) Internationale Anmeldenummer: PCT/EP2004/052843
(87) Internationale Veröffentlichungsnummer: WO 2005/053903

(56) Entgegenhaltungen:
- WO-A-03/095862

## Beschreibung

### Stand der Technik

Die Erfindung geht aus von einer andschleifmaschine sowie einer Auswuchteinheit nach den Oberbegriffen der unabhängigen Ansprüche.

Rotierende Baugruppen etwa einer Handschleifmaschine, deren gemeinsamer Schwerpunkt nicht in der Rotationsachse liegt, verursachen Vibrationen, die von einem Bediener als sehr störend empfunden und zu deren Kompensation Auswuchtsysteme eingesetzt werden. Andererseits ist jedoch ohne Kompensation der Schleiffortschritt größer als mit Kompensation.

Es ist bereits in der DE 19617 478 eine Handschleifmaschine vorgeschlagen worden, bei der zwei Auswuchtmassen eingesetzt werden, die in Achsrichtung einer Arbeitswelle versetzt zueinander angeordnet sind. Die Auswuchtmassen sind auf der Arbeitswelle im Gehäuseinnern der Handschleifmaschine zwischen zwei Drehlagern angeordnet.

Des Weiteren wird aus der WO 03/095862 eine Handschleifmaschine bekannt, die eine Auswuchteinheit mit einer beweglichen Auswuchtmasse und einer festen Auswuchtmasse umfasst.

### Vorteile der Erfindung

Die Erfindung geht aus von einer Handschleifmaschine mit einem in einem Gehäuse angeordneten Motor, mit einem ein Schleifwerkzeug aufnehmenden Aufnahmeflansch und mit einer motorisch angetriebenen Arbeitswelle sowie einer mindestens eine erste und eine zweite Auswuchtmasse aufweisenden Auswuchteinheit, wobei die erste als bewegliche Auswuchtmasse und die zweite als feste Auswuchtmasse ausgebildet ist und wobei sich die bewegliche erste Auswuchtmasse bei drehender Arbeitswelle in eine Auswuchtposition bewegen kann.

Es wird vorgeschlagen, dass die feste zweite Auswuchtmasse eine bauliche Einheit mit der Auswuchteinheit bildet, wobei die feste zweite Auswuchtmasse durch einen Auswuchtsektor gebildet ist, der einen Teil des Umfangs der Auswuchteinheit bildet. Die bewegliche Auswuchtmasse kann sich bei drehender Arbeitswelle in eine Auswuchtposition bewegen, während die feste Auswuchtmasse eine bauliche Einheit mit der Auswuchteinheit bildet und ihre Position, so wie sie montiert wurde, beibehält. Verändert sich eine Unwucht, kann die bewegliche Auswuchtmasse sich zumindest teilweise anpassen, während die feste Auswuchtmasse in der montierten Position verbleibt. Dies ermöglicht vorteilhafterweise, bei zeitlicher Veränderung der Unwucht durch eine fortschreitende Abnutzung und Verschleiß des Schleifwerkzeugs, ein zuverlässiges Auswuchten einer Arbeitswelle und des Schleifwerkzeugs auch bei längerem Gebrauch. Dies erfolgt dadurch, dass z.B. bei gleich großer Auswuchtkapazität der festen und beweglichen Auswuchtmassen durch Subtraktion bzw. Addition eine doppelt so große Auswuchtkapazität abgedeckt werden kann wie durch eine einen gleich großen Bauraum benötigende bewegliche Auswuchteinheit allein. Ferner ermöglicht die Kombination von festen und beweglichen Auswuchtmassen eine kompakte Anordnung. Etwaige Vibrationen an der Handschleifmaschine sind reduziert; der Bedienkomfort der Handschleifmaschine ist erhöht.

Ist die bewegliche erste Auswuchtmasse durch in einer Laufbahn geführte Kugeln gebildet, bilden diese eine besonders leichtgängige bewegliche Auswuchtmasse. Die Kugeln bewegen sich bei rotierender Arbeitswelle selbstständig in die Auswuchtposition und erzielen damit automatisch eine Auswuchtung. Die Auswuchtposition wird bei sich verändernden Bedingungen jeweils automatisch angepasst. Die Anpassung erfolgt sehr schnell, da eine Haftreibung der Kugeln vernachlässigbar ist. Es können eine oder mehrere Laufbahnen konzentrisch zu einer Rotationsachse vorgesehen sein. Alternativ können auch Ringe vorgesehen sein, die sich auf einer oder mehreren konzentrisch zur Rotationsachse verlaufenden Zylinderflächen bewegen.

Ist die feste zweite Auswuchtmasse durch einen Auswuchtsektor gebildet, der einen Teil des Umfangs der Auswuchteinheit bildet, kann ein Anteil der Unwucht kompensiert werden.

Weist der Aufnahmeflansch für ein Schleifwerkzeug eine zu einer Rotationsachse exzentrische Schleifwerkzeugaufnahme auf, kann ein Schleifabtrag erhöht werden bei gleichzeitiger Kompensation der Vibrationen mit verbessertem Bedienkomfort der Handschleifmaschine. So kann bei einer üblichen Handschleifmaschine ebenso ein durch eine Exzentrität der Schleifwerkzeugbewegung vorteilhaft erhöhter Schleifabtrag erzielt werden, wie dies bei Exzenterschleifmaschinen der Fall ist, die speziell für einen Exzenterbetrieb ausgelegt sind.

Ist der Aufnahmeflansch Bestandteil der Auswuchteinheit, ist eine kompakte bauliche Einheit geschaffen, die leicht in Handschleifmaschinen eingebaut und gegebenenfalls leicht ausgetauscht oder nachgerüstet werden kann.

Ist die feste zweite Auswuchtmasse so ausgebildet, dass mindestens 10% einer Schleifwerkzeugunwucht im Neuzustand des Schleifwerkzeugs, resultierend aus der exzentrischen Aufspannung, kompensiert ist, ermöglicht dies eine kompakte Baugröße verglichen mit dem Fall, dass die Schleifwerkzeugunwucht vollständig kompensiert werden müsste. Eine Restunwucht kann von der beweglichen ersten Auswuchtmasse kompensiert werden, die ebenfalls kompakt baut. Es ergibt sich ein günstiges Massenverhältnis zwischen den beiden Auswuchtmassen sowie ein günstiges Größenverhältnis der Auswuchteinheit. Bevorzugt sind 40% bis 60% der Schleifwerkzeugunwucht im Neuzustand kompensiert, besonders bevorzugt etwa die Hälfte der Unwucht im Neuzustand. Die Unwuchten, die beispielsweise aus der beabsichtigten exzentrischen Lage eines Werkzeugaufnahmerings, eines Spiels zwischen Werkzeugaufnahmering und einer Schleifscheibenbohrung und der Eigenunwucht der in der Regel inhomogenen Schleifscheibe herrührt, werden bevorzugt durch vektorielle Addition der Auswuchtwirkung der festen und beweglichen Auswuchtmassen kompensiert. Die vektorielle Auswuchtbedingung für Schleifscheiben lautet M_{V}·e+U_{E}+U_{S}+A_{B}+A_{F}=0; mit M_{V} = veränderliche Schleifscheibenmasse, e = Exzentrizität, U_{E} = Eigenunwucht der Schleifscheibe, U_{S} = Unwucht aus Spiel, A_{B} = bewegliche Auswuchtung, A_{F} = feste Auswuchtung. Die Unwucht des Schleifwerkzeugs, insbesondere einer Schleifscheibe, ändert sich stetig mit ihrem Abnutzungszustand. Die feste zweite Auswuchtmasse kompensiert einen Anteil davon, während die beweglich auswuchtende erste Auswuchtmasse die Restunwucht kompensiert Mit zunehmendem Abnutzungszustand kompensiert die feste zweite Auswuchtmasse einen zunehmend größeren Anteil. Nach Überschreiten eines Zustands, bei dem die feste zweite Auswuchtmasse gerade das durch den Verschleiß reduzierte Gewicht des Schleifwerkzeugs kompensiert, dreht sich die Auswuchtrichtung der beweglichen ersten Auswuchtmasse um und kompensiert die Restunwucht, die aus der Differenz zwischen fester zweiter Auswuchtmasse und geringer werdender Schleifwerkzeugunwucht herrührt.

Ist die bewegliche erste Auswuchtmasse auf der von der Schleifwerkzeugaufnahme abgewandten Seite der Auswuchteinheit angeordnet, lässt sich eine günstige Geometrie der Auswuchteinheit erreichen. Auf der Rückseite der Auswuchteinheit steht ausreichend Bauraum zur Verfügung, um eine geeignete Laufbahn zu integrieren.

Ferner geht die Erfindung aus von einer Auswuchteinheit für eine Handschleifmaschine mit zumindest zwei Auswuchtmassen, wobei eine bewegliche erste Auswuchtmasse und eine feste zweite Auswuchtmasse vorgesehen sind.

Es wird vorgeschlagen, dass die feste zweite Auswuchtmasse eine bauliche Einheit der Auswuchteinheit bildet, wobei die feste zweite Auswuchtmasse durch einen Auswuchtsektor gebildet ist, der einen Teil eines Umfangs der Auswuchteinheit bildet. Dies ermöglicht vorteilhafterweise, auch bei zeitlicher Veränderung der Unwucht, ein zuverlässiges Auswuchten eines Werkzeugs sowie eine kompakte Anordnung durch die sich ergänzenden Auswuchtmassen.

Ist ein Aufnahmeflansch für ein Schleifwerkzeug vorgesehen, lässt sich eine Einheit zum Auswuchten einer Arbeitswelle und eines Schleifwerkzeugs für eine Handschleifmaschine schaffen. Der Aufnahmeflansch ist vorzugsweise an einer Stirnfläche angeordnet, womit sich eine klein bauende, kompakte Anordnung ergibt. Dies lässt sich baulich günstig gestalten. Die bewegliche erste Auswuchtmasse ist bevorzugt auf der dem Aufnahmeflansch entgegengesetzten Seite angeordnet. Damit steht ausreichender Bauraum zur Ausgestaltung von Laufbahnen oder Zylinderflächen für die bewegliche Auswuchtmasse zur Verfügung. Die bewegliche und die feste Auswuchtmasse sind im Wesentlichen in Umfangsrichtung zueinander versetzt. Ebenso kann zusätzlich oder alternativ ein Versatz in axialer Richtung der Rotationsachse vorgesehen sein. Bei einer Anordnung, bei der die Auswuchtmassen im Wesentlichen in Umfangsrichtung zueinander versetzt angeordnet sind, ergibt sich ein günstiges Kräfteverhältnis zwischen fester und beweglicher Auswuchtmassen.

Ist die bewegliche Auswuchtmasse durch in einer Laufbahn geführte Kugeln gebildet, lassen sich diese leicht in eine vorteilhafte Auswuchtposition bringen. Die Kugeln bewegen sich bei rotierender Arbeitswelle selbstständig in die Auswuchtposition und erzielen damit automatisch eine Auswuchtung. Es können auch andere bewegliche Auswuchtmassen, wie etwa Ringe um eine Laufbahn, vorgesehen sein.

Ist die feste zweite Auswuchtmasse durch einen Auswuchtsektor, der Teil eines Umfangs der Auswuchteinheit ist, gebildet, kann eine günstige Geometrie und Kraftwirkung der beiden Auswuchtmassen erzielt werden.

Nimmt der Auswuchtsektor einen Winkelbereich von 25% bis 75% ein, kann ein günstiges Gewichts- und Größenverhältnis zwischen den beiden Auswuchtmassen und damit auch für die Auswuchteinheit erzielt werden. Bevorzugt nimmt der Auswuchtsektor höchstens die Hälfte, besonders bevorzugt etwa 40%, des Umfangs ein.

Bevorzugt ist der Auswuchtsektor einer Exzentrizitätsrichtung des Aufnahmeflanschs entgegengesetzt angeordnet. Dies ist besonders bei einem exzentrischen Aufnahmeflansch für eine Schleifscheibe günstig.

Die Erfindung kann sowohl für übliche Schleifinaschinen, insbesondere Handschleifmaschinen, als auch für Exzenterschleifmaschinen, Dreieckschleifmaschinen oder Schwingschleifmaschinen eingesetzt werden.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine bevorzugte Handschleifmaschine mit einer Auswuchteinheit,
- Fig. 2: als Detail die Auswuchteinheit mit integriertem Aufnahmeflansch,
- Fig. 3: eine Explosionsansicht der Auswuchteinheit,
- Fig. 4: (a) ein seitlicher Schnitt durch die Auswuchteinheit, (b) eine Aufsicht auf den Aufnahmeflansch mit exzentrischer Schleifwerkzeugaufnahme, (c) eine Aufsicht auf die Rückseite der Auswuchteinheit mit offener Laufbahn.

### Beschreibung des Ausführungsbeispiels

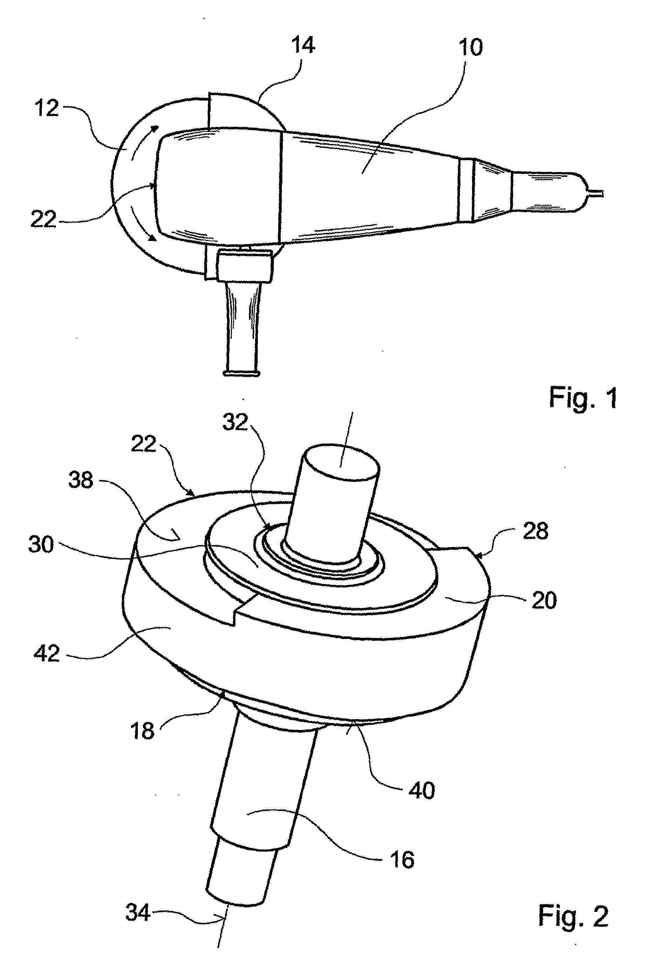

Fig. 1 zeigt eine bevorzugte Handschleifmaschine in einer Draufsicht mit einem in einem Gehäuse 10 angeordneten Motor, mit einem Schleifwerkzeug 12, welches mit einer nicht dargestellten motorisch angetriebenen Arbeitswelle verbunden ist, sowie einer Auswuchteinheit 22, die in den folgenden Figuren näher beschrieben ist. In den Figuren sind gleiche Teile grundsätzlich mit gleichen Bezugszeichen beziffert. Das Schleifwerkzeug 12, hier eine Schleifscheibe, kann mit einer Schutzhaube 14 abgedeckt sein, um einen Bediener vor Verletzungen zu schützen.

Ein Detail der Anordnung der Auswuchteinheit 22 ist in Fig. 2 dargestellt. Auf einer Arbeitswelle 16, die von dem nicht dargestellten Motor, insbesondere einem Elektromotor, angetrieben wird, sitzt die Auswuchteinheit 22 konzentrisch mit einem auf einer vorderen Seite 38 integrierten Aufnahmeflansch 30, der eine exzentrisch ausgebildete Schleifwerkzeugaufnahme 32 für das Schleifwerkzeug 12 aufweist. Die Arbeitswelle 16 rotiert um die Rotationsachse 34. Die Auswuchteinheit 22 weist eine feste zweite Auswuchtmasse 20 auf sowie eine bewegliche erste Auswuchtmasse 18, die sich von der der Seite 38 des Aufnahmeflanschs 30 entgegengesetzten Seite 40 am Umfang 42 axial in Richtung der rückwärtige Seite 40 erstreckt.

Die feste zweite Auswuchtmasse 20 ist durch einen Auswuchtsektor 28 gebildet, der Teil des Umfangs 42 der Auswuchteinheit 22 ist und sich in axialer Richtung entlang des Umfangs 42 erstreckt. Optional kann die zweite Auswuchtmasse 20 auch durch einen anderen Teil der Auswuchteinheit 22 gebildet sein. Die stirnseitige Fläche des Auswuchtsektors 28 ist gegenüber dem Aufnahmeflansch 30 etwas nach unten versetzt, so dass der Aufnahmeflansch 30 eine Stirnfläche der Auswuchteinheit 22 bildet und ein Schleifwerkzeug 12 leicht montiert werden kann. Der Auswuchtsektor 28 erstreckt sich vorzugsweise über einen Winkelbereich α, der höchstens die Hälfte des Umfangs 42 umfasst, bevorzugt etwa α = 120°-180°, besonders bevorzugt α = 150°.

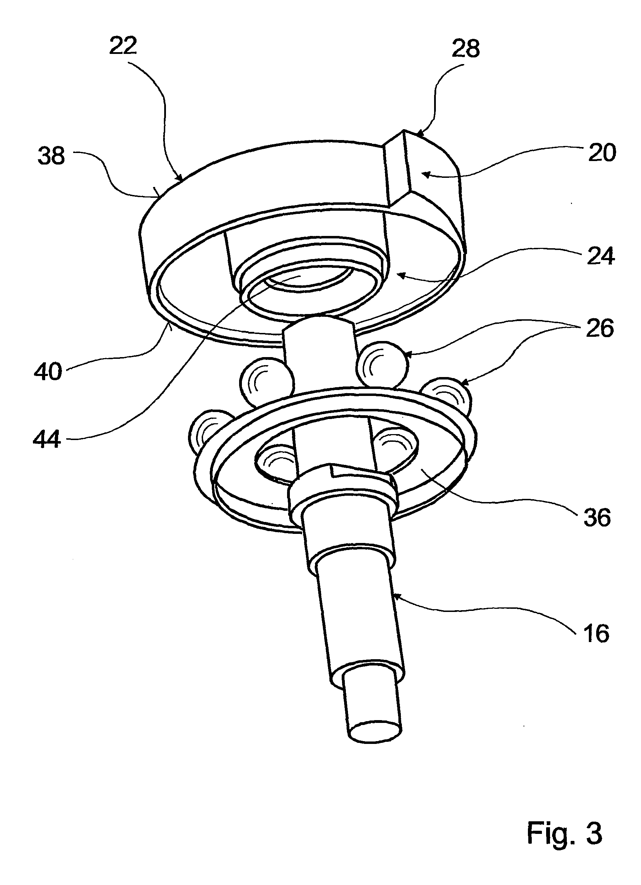

Die bewegliche erste Auswuchtmasse 18 ist durch in einer Laufbahn 24 geführte Kugeln 26 gebildet. Dies ist in einer Explosionsdarstellung in Fig. 3 detaillierter dargestellt.

Die bevorzugte Auswuchteinheit 22 weist an ihrer dem Aufnahmeflansch 30 entgegengesetzten Seite 40 eine konzentrisch um einen Durchbruch 44 für die Arbeitswelle 16 angeordnete Vertiefung auf, die eine Laufbahn 24 für die bewegliche erste Auswuchtmasse 18 bildet.

Die bewegliche Auswuchtmasse 18 ist durch eine Mehrzahl von Kugeln 26 gebildet, von denen der Übersichtlichkeit wegen nur einige beziffert sind. Diese können in der Laufbahn 24 umlaufen, so dass bei rotierender Arbeitswelle 16 die Kugeln 26 selbstständig eine Auswuchtposition einnehmen. Die Laufbahn 24 ist durch eine Abdeckung 36 verschlossen und die Kugeln 26 damit in der Laufbahn 24 eingeschlossen. Die feste zweite Auswuchtmasse 20 erstreckt sich in der gezeigten Ausführung von der Stirnseite 38 am Umfang 42 der Auswuchteinheit 22 bis zu deren Rückseite 40.

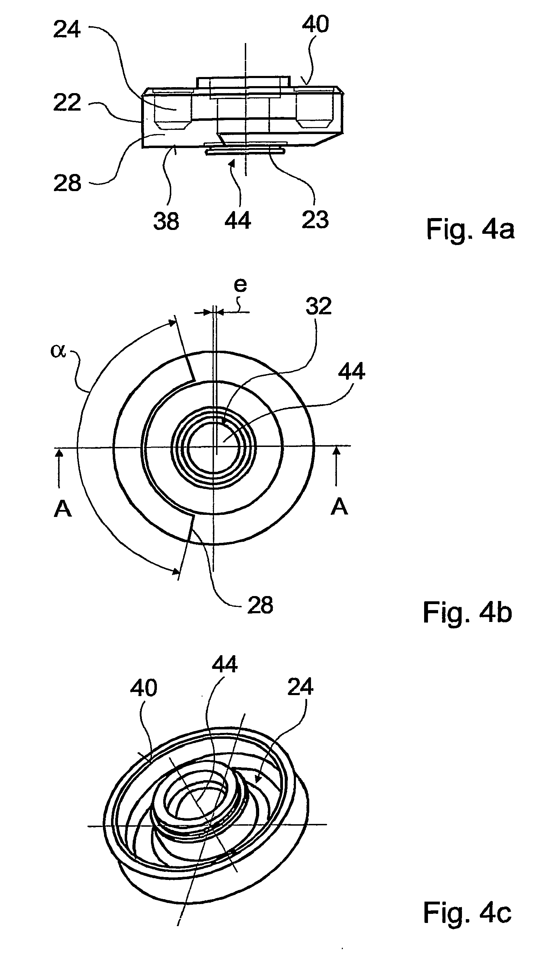

Fig. 4 a, b, c zeigt einen bevorzugten Aufnahmeflansch 30 im Detail. Dieser weist an seiner Stirnseite 38 eine Schleifwerkzeugaufnahme 32 auf, während an der Rückseite 40 eine Laufbahn 24 für die bewegliche erste Auswuchtmasse 18 eingelassen ist (Fig. 4 a). Die Schleifwerkzeugaufnahme 32 weist eine Exzentrizität e auf, die ein montiertes Schleifwerkzeug 12, etwa eine Schleifscheibe, eine exzentrische Bahn beschreiben lässt und so den Schleifabtrag erhöht. Der Aufnahmeflansch 30 bildet mit der Auswuchteinheit 22 eine bauliche Einheit.

Die feste zweite Auswuchtmasse 20 ist so bemessen, dass eine Schleifwerkzeugunwucht im Neuzustand des Schleifwerkzeugs 12 zu einem merklichen Anteil kompensiert ist. Günstigerweise sind 10% bis 90%, bevorzugt 40% bis 60% der Schleifwerkzeugunwucht im Neuzustand kompensiert, besonders bevorzugt etwa die Hälfte. Die Laufbahn 24 der Kugeln 26 (Fig. 3) ist im Detail in Fig. 4 c dargestellt. Die Laufbahn 24 ist konzentrisch um einen Durchbruch 44 angeordnet, in dem im montierten Zustand eine Arbeitswelle 16 steckt.

## Patentansprüche

1. Handschleifmaschine mit einem in einem Gehäuse (10) angeordneten Motor, mit einem ein Schleifwerkzeug (12) aufnehmenden Aufnahmeflansch (30) und mit einer motorisch angetriebenen Arbeitswelle (16) sowie einer mindestens eine erste und eine zweite Auswuchtmasse (18, 20) aufweisenden Auswuchteinheit (22), wobei die erste als bewegliche Auswuchtmasse (18) und die zweite als feste Auswuchtmasse (20) ausgebildet ist und wobei sich die bewegliche erste Auswuchtmasse (18) bei drehender Arbeitswelle (16) in eine Auswuchtposition bewegen kann, **dadurch gekennzeichnet, dass** die feste zweite Auswuchtmasse (20) eine bauliche Einheit mit der Auswuchteinheit (22) bildet, wobei die feste zweite Auswuchtmasse (20) durch einen Auswuchtsektor (28) gebildet ist, der einen Teil des Umfangs (42) der Auswuchteinheit (22) bildet.

2. Handschleifmaschine nach Anspruch 1, **dadurch gekennzeichnet, dass** die bewegliche erste Auswuchtmasse (18) durch in einer Laufbahn (24) geführte Kugeln (26) gebildet ist.

3. Handschleifmaschine nach einem der vorhergehenden Ansprüche, **dadurch gekennzeichnet, dass** der Aufnahmeflansch (30) für ein Schleifwerkzeug (12) eine zu einer Rotationsachse (34) exzentrische Schleifwerkzeugaufnahme (32) aufweist.

4. Handschleifmaschine nach einem der vorhergehenden Ansprüche, **dadurch gekennzeichnet, dass** der Aufnahmeflansch (30) Bestandteil der Auswuchteinheit (22) ist.

5. Handschleifmaschine nach einem der vorhergehenden Ansprüche, **dadurch gekennzeichnet, dass** über die feste zweite Auswuchtmasse (20) mindestens 10% einer Schleifwerkzeugunwucht im Neuzustand des Schleifwerkzeugs (12) kompensierbar ist.

6. Handschleifmaschine nach einem der vorhergehenden Ansprüche, **dadurch gekennzeichnet, dass** die bewegliche erste Auswuchtmasse (18) auf der von dem Aufnahmeflansch (30) abgewandten Seite (40) der Auswuchteinheit (22) angeordnet ist.

7. Auswuchteinheit für eine Handschleifmaschine mit zumindest zwei Auswuchtmassen (18, 20), wobei eine bewegliche erste Auswuchtmasse (18) und eine feste zweite Auswuchtmasse (20) vorgesehen sind, **dadurch gekennzeichnet, dass** die feste zweite Auswuchtmasse (20) eine bauliche Einheit der Auswuchteinheit (22) bildet, wobei die feste zweite Auswuchtmasse (20) durch einen Auswuchtsektor (28) gebildet ist, der einen Teil eines Umfangs (42) der Auswuchteinheit (22) bildet.

8. Auswuchteinheit nach Anspruch 7, **dadurch gekennzeichnet, dass** ein Aufnahmeflansch (30) für ein Schleifwerkzeug (12) vorgesehen ist.

9. Auswuchteinheit nach einem der Ansprüche 7 oder 8, **dadurch gekennzeichnet, dass** die bewegliche erste Auswuchtmasse (18) durch in einer Laufbahn (24) geführte Kugeln (26) gebildet ist.

10. Auswuchteinheit nach einem der Ansprüche 7 oder 8, **dadurch gekennzeichnet, dass** die bewegliche erste Auswuchtmasse (18) durch in einer Laufbahn (24) geführte Ringe gebildet ist.

11. Auswuchteinheit nach Anspruch 7, **dadurch gekennzeichnet, dass** der Auswuchtsektor (28) einen Winkelbereich (a) von 25% bis 75% des Umfangs (42) einnimmt.

12. Auswuchteinheit nach Anspruch 7 oder 11, **dadurch gekennzeichnet, dass** der Auswuchtsektor (28) einer Exzentrizitätsrichtung des Aufnahmeflanschs (30) entgegengesetzt angeordnet ist.

## Claims

1. Portable grinder comprising a motor arranged in a housing (10), comprising a locating flange (30) accommodating a grinding tool (12), and comprising a motor-driven work shaft (16) and a balancing unit (22) having at least one first and one second balancing mass (18, 20), wherein the first is designed as a movable balancing mass (18) and the second is designed as a fixed balancing mass (20), and wherein the movable first balancing mass (18) can move into a balancing position when the work shaft (16) is rotating, **characterized in that** the fixed second balancing mass (20) forms a structural unit with the balancing unit (22), wherein the fixed second balancing mass (20) is formed by a balancing sector (28) which is part of the circumference (42) of the balancing unit (22).

2. Portable grinder according to Claim 1,
**characterized in that** the movable first balancing mass (18) is formed by balls (26) guided in a raceway (24).

3. Portable grinder according to either of the preceding claims, **characterized in that** the locating flange (30) for a grinding tool (12) has a grinding-tool receptacle (32) eccentric to a rotation axis (34).

4. Portable grinder according to one of the preceding claims, **characterized in that** the locating flange (30) is an integral part of the balancing unit (22).

5. Portable grinder according to one of the preceding claims, **characterized in that** at least 10% of a grinding-tool unbalance in the new state of the grinding tool (12) can be compensated for via the fixed second balancing mass (20).

6. Portable grinder according to one of the preceding claims, **characterized in that** the movable first balancing mass (18) is arranged on that side (40) of the balancing unit (22) which is remote from the locating flange (30).

7. Balancing unit for a portable grinder, comprising at least two balancing masses (18, 20), wherein a movable first balancing mass (18) and a fixed second balancing mass (20) are provided, **characterized in that** the fixed second balancing mass (20) forms a structural unit with the balancing unit (22), wherein the fixed second balancing mass (20) is formed by a balancing sector (28) which is part of the circumference (42) of the balancing unit (22).

8. Balancing unit according to Claim 7, **characterized in that** a locating flange (30) for a grinding tool (12) is provided.

9. Balancing unit according to either of Claims 7 and 8, **characterized in that** the movable first balancing mass (18) is formed by balls (26) guided in a raceway (24).

10. Balancing unit according to either of Claims 7 and 8, **characterized in that** the movable first balancing mass (18) is formed by rings guided in a raceway (24).

11. Balancing unit according to Claim 7, **characterized in that** the balancing sector (28) encloses an angular range (α) of 25% to 75% of the circumference (42).

12. Balancing unit according to Claim 7 or 11, **characterized in that** the balancing sector (28) is arranged counter to a direction of eccentricity of the locating flange (30).

## Revendications

1. Meuleuse d'angle comportant un moteur logé dans un boîtier (10) ayant une bride porte-outils (30) recevant un outil de meulage (12) ainsi qu'un arbre (16) entraîné par un moteur et une unité d'équilibrage (22) ayant au moins une première et une seconde masse d'équilibrage (18, 20),
la première masse d'équilibrage (18) étant mobile et la seconde masse d'équilibrage (20) étant fixe, et
la première masse d'équilibrage (18), mobile, se déplaçant dans une position d'équilibrage lorsque l'arbre (16) tourne,
**caractérisée en ce que**
la seconde masse d'équilibrage (20), fixe, constitue une unité constructive avec l'unité d'équilibrage (22), la seconde masse d'équilibrage (20), fixe, étant formée par un secteur d'équilibrage (28) constituant une partie de la périphérie (42) de l'unité d'équilibrage (22).

2. Meuleuse d'angle selon la revendication 1,
**caractérisée en ce que**
la première masse d'équilibrage mobile (18) est formée par des billes (26) guidées dans un chemin de circulation (24).

3. Meuleuse d'angle selon l'une des revendications précédentes,
**caractérisée en ce que**
la bride porte outil (30) recevant un outil de meulage (12) comporte un moyen de réception d'outil (32) excentré par rapport à l'axe de rotation (34).

4. Meuleuse d'angle selon l'une des revendications précédentes,
**caractérisée en ce que**
la bride porte outil (30) fait partie de l'unité d'équilibrage (22).

5. Meuleuse d'angle selon l'une des revendications précédentes,
**caractérisée en ce que**
la seconde masse d'équilibrage (20), fixe, compense au moins 10 % du balourd de l'outil de meulage (12) à l'état neuf.

6. Meuleuse d'angle selon l'une des revendications précédentes,
**caractérisée en ce que**
la première masse d'équilibrage (18), mobile, est prévue sur le côté (40) de l'unité d'équilibrage (22), à l'opposé de la bride porte outil (30).

7. Unité d'équilibrage pour une meuleuse d'angle comportant au moins deux masses d'équilibrage (18, 20), une première masse d'équilibrage (18), mobile, et une seconde masse d'équilibrage (20), fixe,
**caractérisée en ce que**
la seconde masse d'équilibrage (20), fixe, constitue une unité constructive de l'unité d'équilibrage (22), la seconde masse d'équilibrage (20), fixe, étant formée par un secteur d'équilibrage (28) faisant partie de la périphérie (42) de l'unité d'équilibrage (22).

8. Unité d'équilibrage selon la revendication 7,
**caractérisée par**
une bride porte outil (30) pour un outil de meulage (12).

9. Unité d'équilibrage selon l'une des revendications 7 ou 8,
**caractérisée en ce que**
la première masse d'équilibrage (18), mobile, est formée par des billes (26) guidées sur un chemin de circulation (24).

10. Unité d'équilibrage selon l'une des revendications 7 ou 8,
**caractérisée en ce que**
la première masse d'équilibrage (18), mobile, est formée par des anneaux guidés dans un chemin de circulation (24).

11. Unité d'équilibrage selon l'une des revendications 7,
**caractérisée en ce que**
le secteur d'équilibrage (28) représente une plage angulaire (a) comprise entre 25 % et 75 % de la périphérie (42).

12. Unité d'équilibrage selon les revendications 7 ou 11,
**caractérisée en ce que**
le secteur d'équilibrage (28) est à l'opposé de la direction de l'excentricité de la bride porte outil (30).
